# EUROPEAN PATENT SPECIFICATION

(11) **EP 3 476 673 B1**
(45) Date of publication and mention of the grant of the patent: **16.10.2019**
(21) Application number: 17199177.1
(22) Date of filing: 30.10.2017
(51) Int. Cl.: B60R 99/00

(54) **VEHICLE IMAGE DISPLAYING APPARATUS AND METHOD OF DISPLAYING IMAGE DATA ON A HEAD-MOUNTED DISPLAY DEVICE DISPOSED IN A VEHICLE**
BILDANZEIGEVORRICHTUNG UND BILDANZEIGEVERFAHREN IN EINER KOPFMONTIERTEN ANZEIGEVORRICHTUNG IN EINEM FAHRZEUG
DISPOSITIF ET PROCÉDÉ D'AFFICHAGE D'IMAGE DANS UN SYSTÈME OPTIQUE D'OCULAIRE POUR UN AFFICHAGE PRÈS DE L' IL DANS UN VÉHICULE

(43) Date of publication of application: 01.05.2019
(73) Proprietor: Alpine Electronics, Inc., Tokyo (JP)
(72) Inventor: GALOS, Andreas, Iwaki-city Fukushima (JP)
(74) Representative: Schmitt-Nilson Schraud Waibel Wohlfrom Patentanwälte Partnerschaft mbB

(56) References cited:
- US-A1- 2006 079 729

## Description

The present invention relates to a vehicle image displaying apparatus, method of displaying image data on a head-mounted display device disposed in a vehicle, and a computer program product comprising software code sections to perform such method.

Some existing entertainment systems available for use in vehicles provide an audio and/or video entertainment program to occupants via loudspeakers and display devices. For example, a driver and front seat passenger may listen to a radio program, while a rear seat passenger watches through a so-called rear seat entertainment system a video on a video display and listens to the corresponding audio via headphones.

Rear seat entertainment systems for vehicles, such as cars (automobiles), are well known, and typically comprise a monitor with a monitor screen, the angle of which is often adjustable, mounted to the rear of a first seat for viewing by a passenger seated behind that first seat. The monitor may be mounted in the seat-back itself, in a headrest for that seat or otherwise mounted to the back of the seat or the back of the headrest or from posts mounting the headrest. Similar such entertainment systems are incorporated in the seat backs on some railway passenger seats and seats in long distance coach transport vehicles.

Such known rear seat entertainment system setups have typically the following drawbacks: Due to packaging constraints, the monitor size cannot be large since the seat back or headrest have only a limited extension. This can be disappointing to the users, because, e.g., movie watching experience is significantly decreased as compared to a home entertainment system. In addition, the rear seat passenger's view is obstructed by vehicle structure, such as seats, headrests and other passengers. This can also be disappointing to users of a rear seat entertainment system, because they cannot enjoy the journey so much.

US 2006/079729 A1 discloses methods, apparatuses and systems for enabling a passenger in a moving vehicle to read text or view an image while avoiding or reducing the symptoms of motion sickness, by providing the passenger a view of the text or image simultaneously with a view of external stationary reference points. The methods, apparatuses, and systems, in some embodiments, include the use of a transparent medium which can display text or images. Other embodiments include a video camera capturing video images and substantially simultaneously displaying such images together with text or images on a means of display. For example, an occupant of the automobile sits on a seat and holds a document presentation device so that he or she has a view of an external environment through the document presentation device. In a further embodiment a document viewing device is directly coupled to an interior surface of an automobile.

It is thus an object of the present invention to provide a vehicle image displaying apparatus and a method of displaying image data to a user seated in a vehicle which are capable to overcome the above mentioned drawbacks.

The invention relates to a vehicle image displaying apparatus and a method of displaying image data on a head-mounted display device disposed in a vehicle according to the appended claims. The invention further relates to a computer program product comprising software code sections which are adapted to perform such method.

In a first aspect, there is disclosed a method of displaying image data on a head-mounted display device disposed in a vehicle, comprising the steps of:
receiving, by a computing device comprising a processor and adapted to be coupled with the head-mounted display device worn by a user in the vehicle, at least one first image for displaying on the head-mounted display device,
receiving, by the computing device, at least one sequence of second images of an environment proximate the vehicle captured with a panoramic vehicle camera during motion of the vehicle,
determining, by the computing device, at least one parameter which is indicative of at least one vehicle motion property,
displaying, by the computing device, during motion of the vehicle and when the at least one parameter has a first value, the at least one first image and the at least one sequence of second images simultaneously on the head-mounted display device such that the at least one first image is overlaid onto the at least one sequence of second images and the at least one sequence of second images provides a peripheral optical flow of images to the user when focusing on the at least one first image, and
changing, by the computing device, at least one image property of the at least one sequence of second images if the at least one parameter has a second value different from the first value.

In a second aspect, there is disclosed a vehicle image displaying apparatus comprising a computing device comprising a processor, the computing device adapted to be coupled with a head-mounted display device worn by a user in a vehicle, and configured to receive at least one first image for displaying on the head-mounted display device. The computing device is configured to further receive at least one sequence of second images of an environment proximate the vehicle captured with a panoramic vehicle camera during motion of the vehicle. The computing device is further configured to determine at least one parameter which is indicative of at least one vehicle motion property, and to display, during motion of the vehicle and when the at least one parameter has a first value, the at least one first image and the at least one sequence of second images simultaneously on the head-mounted display device such that the at least one first image is overlaid onto the at least one sequence of second images and the at least one sequence of second images provides a peripheral optical flow of images to the user when focusing on the at least one first image. In addition, the computing device is configured to change at least one image property of the at least one sequence of second images if the at least one parameter has a second value different from the first value.

Advantageously, the present invention addresses the problems of known rear seat entertainment systems as mentioned above. It particularly provides an unobstructed view around the passenger's current position in the vehicle, is capable to provide a large-screen movie playback on the head-mounted display device (particularly on a large virtual display screen, e.g. if it is implemented as a virtual reality (VR) head-mounted display device), while it avoids motion sickness which may arise if the head-mounted display device is used in the vehicle without any additional measures. So, even if the rear seat passenger is watching a movie on the head-mounted display device, the passenger will not suffer from motion sickness caused by using the head-mounted display device during motion of the vehicle, because the peripheral optical flow of images of the environment is related to his perceived body motion caused by the vehicle motion and is changed accordingly depending on the at least one parameter which is indicative of at least one vehicle motion property. Nevertheless, the passenger can enjoy an unobstructed view of the environment and journey around the vehicle (such as castles, landscapes, etc.), which is provided by the sequence of second images captured by the panoramic vehicle camera during motion of the vehicle.

Particularly, the computing device changes at least one image property of the at least one sequence of second images if the at least one parameter has a second value different from the first value. According to an embodiment, the at least one parameter may be determined by the computing device in intervals, such as in regular intervals, e.g. every few seconds or in even shorter time periods.

According to an embodiment, changing at least one image property of the at least one sequence of second images includes changing at least one of sharpness, color, saturation, brightness, and contrast of the at least one sequence of second images. In order to avoid motion sickness, the sequence of second images providing the peripheral optical flow of the environment, particularly the way of presenting it to the user, can thus be automatically adjusted according to high or low vehicle dynamics depending on the determined at least one parameter which is, for example, continuously updated by the computing device. As such, it is possible to avoid motion sickness, since the peripheral optical flow and its visual impression to the user can be adjusted and changed according to the perceived body motion.

In order that the at least one sequence of second images provides a well perceivable peripheral optical flow of images to the user when focusing on the at least one first image, according to an embodiment, the at least one first image is overlaid onto the at least one sequence of second images such that the at least one first image is framed by the at least one sequence of second images on the head-mounted display device.

According to an embodiment, the at least one parameter is determined from sensor data provided by a sensor device. According to embodiments of the invention, the sensor device is comprised in one or more of the following devices: the vehicle, the panoramic vehicle camera, a navigation system located in the vehicle, and a portable device adapted to be carried by the user. Preferably, the portable device is one of a smartphone and tablet computer.

According to an embodiment, the at least one parameter is indicative of at least one acceleration of an entity caused by motion of the vehicle. For example, an acceleration of the vehicle itself may be determined, e.g. by an acceleration sensor of the vehicle. According to another embodiment, an acceleration of any other device located in or on the vehicle, such as of the vehicle camera, may be determined, e.g. sensed from an acceleration sensor disposed within the respective device, such as the vehicle camera. According to another embodiment, an acceleration of a mobile device disposed within the vehicle, such as of the passenger's smartphone, may be determined, e.g. sensed from an acceleration sensor disposed within the user's (or any other) smartphone located in the vehicle.

For example, the sensor device used for determining the at least one parameter may be an acceleration sensor, e.g. disposed in the vehicle or in the user's mobile device. It may also be implemented by a navigation sensor of a navigation system which determines vehicle speed or acceleration according to map data and the change of position of the vehicle. Such implementation also enables an anticipatory sensor reading, for example if the vehicle approaches a curve or crossroads on the route which may be taken into account when adjusting the image properties of the sequence of second images of the environment. According to another embodiment, the sensor device may be an acceleration sensor disposed in a smartphone. The invention may thus advantageously use an acceleration sensor already implemented in the mobile device.

According to an embodiment, the method comprises that if the second value of the at least one parameter is indicative of a higher acceleration than the first value, at least one of sharpness, color, saturation, brightness, and contrast of the at least one sequence of second images is changed in a direction to closer conform with reality, and if the second value of the at least one parameter is indicative of a lower acceleration than the first value, at least one of sharpness, color, saturation, brightness, and contrast of the at least one sequence of second images is changed in a direction to alienate from reality.

For example, in driving situations with higher vehicle dynamics (as in, e.g, city drive, curvy country road, etc.) with the passenger being exposed to a higher acceleration during vehicle motion, the sequence of second images (that is, the live camera image stream of the environment) may be displayed quite real (e.g., with brightness, color, sharpness, etc., close to or equal as viewed in reality) for full visual and sensoric immersion. In driving situations with lower vehicle dynamics (as when driving on, e.g., a straight motorway, waiting at traffic light, etc.) with the passenger being exposed to a lower acceleration during vehicle motion, the sequence of second images (that is, the live camera image stream of the environment) may be displayed in a manner alienated from reality, e.g. with reduced sharpness, and/or brightness, and/or with dark, blurry, and/or unsaturated colors, etc.), keeping just a slight reference for peripheral optical flow of images of the environment.

According to an embodiment, the method further comprises changing, by the computing device, the displaying of the at least one first image on the head-mounted display device if the at least one parameter has the second value. That is, in addition to changing the at least one image property of the at least one sequence of second images of the environment, if the at least one parameter has a second value different from the first value, the displaying of the at least one first image on the head-mounted display device is changed by the computing device.

According to an embodiment, changing, by the computing device, the displaying of the at least one first image on the head-mounted display device includes changing a size of the at least one first image.

According to an embodiment, if the second value of the at least one parameter is indicative of a higher acceleration than the first value, the size of the at least one first image is adjusted to a first size, and if the second value of the at least one parameter is indicative of a lower acceleration than the first value, the size of the at least one first image is adjusted to a second size which is greater than the first size.

For example, in driving situations with higher vehicle dynamics (as in, e.g, city drive, curvy country road, etc.) with the passenger being exposed to a higher acceleration during vehicle motion, the size of the movie screen (displaying a sequence of first images) is smaller and the sequence of second images (that is, the live camera image stream of the environment) may be displayed quite real (e.g., with brightness, color, sharpness, etc., close to or equal as viewed in reality) for full visual and sensoric immersion. In driving situations with lower vehicle dynamics (as when driving on, e.g., a straight motorway, waiting at traffic light, ...) with the passenger being exposed to a lower acceleration during vehicle motion, the size of the movie screen (displaying a sequence of first images) is larger and the sequence of second images (that is, the live camera image stream of the environment) may be displayed in a manner alienated from reality, e.g. with reduced sharpness, and/or brightness, and/or with dark, blurry, and/or unsaturated colors, etc.), keeping just a slight reference for peripheral optical flow of images of the environment.

According to an embodiment, the at least one first image is at least one sequence of first images, preferably the least one sequence of first images is part of a video stream. In this way, the user can watch a movie on the head-mounted display device while being seated in the vehicle, but without the drawbacks as mentioned above and without an increased risk of becoming motion-sick.

According to an embodiment, the panoramic vehicle camera has a panoramic field of view at least in a horizontal plane of the vehicle and is mounted at a roof of the vehicle. Preferably, the panoramic vehicle camera provides a field of view within a range of approximately +/- 110° from a central line of vision. According to an embodiment, it is an omnidirectional vehicle camera with an approximately 360-degree field of view at least in the horizontal plane of the vehicle. This provides the advantage that the user may enjoy an all around panoramic view of the environment in a 360° view.

According to an embodiment, the computing device is comprised in at least one of: the vehicle, the panoramic vehicle camera, a navigation system located in the vehicle, and a portable device adapted to be carried by the user. Preferably, the portable device is one of a smartphone and tablet computer. Such computing device may be, for example, implemented in, or part of, a processor of an ECU (electronic control unit) or a HU (heat unit) of the vehicle, or may be a separate component (e.g. coupled to the Ethernet-Bus or CAN-Bus of the vehicle), or may be a distributed system using one or more processors and integrated circuits in or outside the vehicle. For example, the determining of the at least one parameter, such as acceleration, may be performed in a processor of the vehicle's ECU, whereas the providing of the images to the head-mounted display device and changing the image properties may be performed by the processor of the user's smartphone, and/or a processor in the vehicle camera. For example, the head-mounted display device may be an apparatus in which the smartphone is placed behind a screen mounted on the user's head, and the display screen of the smartphone itself then displays the first and second images superimposed one upon the other through the screen, thus providing an impression of a VR display. The functions performed by the computing device may be implemented in hardware and/or in software.

Accordingly, in a preferred embodiment, the head-mounted display device is a virtual reality head-mounted display device (so-called VR headset).

According to another aspect, there is provided a computer program product comprising software code sections which are adapted to perform a method according to the invention as described herein. In particular, such computer program product may be implemented, in principle, in any computing device on the vehicle or outside the vehicle which is appropriate to perform the respective function. As set out above, such computing device may be, for example, implemented in, or part of, a processor of an ECU of the vehicle, or may be a separate component (e.g. coupled to the Ethernet-Bus of the vehicle through wire or wirelessly), or may be a distributed system using one or more processors. The computer program may be stored on a computer readable medium.

Any aspects and embodiments described herein with respect to the method can equally or analogously be employed in the vehicle image displaying apparatus as described herein, and vice versa, with the computing device and/or vehicle camera configured (by software and/or hardware) appropriately.

The present invention can be used, in principle, in any type of vehicle, preferably in a car (automobile) of common type which typically is exposed to a large range of vehicle dynamics during driving. The present invention can also be used in a railway passenger vehicle or in a coach transport vehicle. The vehicle image displaying apparatus may be used as a "passenger seat entertainment system" (in a manner like a rear seat entertainment system of a known implementation), e.g., in which a driver may listen to a radio program, while a vehicle passenger (seated in a passenger or rear seat) watches a video (such as a movie) through the head-mounted display device and listens to the corresponding audio via headphones.

Aspects of the invention and embodiments will now be described with reference to the following Figures, in which
- Fig. 1: depicts a schematic view of a vehicle including a vehicle image displaying apparatus according to an embodiment of the invention,
- Fig. 2: is a schematic block diagram of a vehicle image displaying apparatus according to an embodiment of the invention,
- Fig. 3A: shows a schematic depiction of a display provided by a head-mounted display device of a vehicle image displaying apparatus according to an embodiment of the invention with a sequence of first images, e.g. a movie, superimposed on a sequence of second images of an environment captured by a panoramic vehicle camera in a driving situation with higher vehicle dynamics,
- Fig. 3B: shows a schematic depiction of a display provided by the headmounted display device of a vehicle image displaying apparatus according to another embodiment of the invention with a sequence of first images, e.g. a movie, superimposed on a sequence of second images of an environment captured by a panoramic vehicle camera in a driving situation with lower vehicle dynamics.

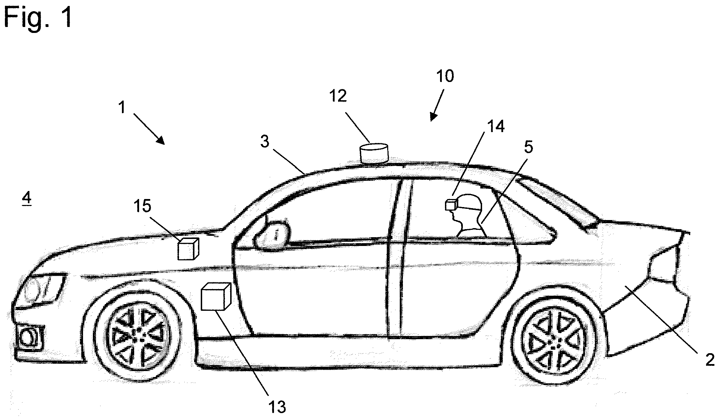

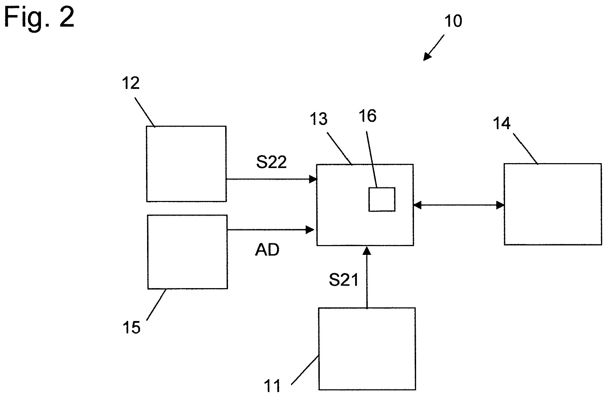

Fig. 2 in combination with Fig. 1 shows a schematic block diagram of a vehicle image displaying apparatus 10 according to an embodiment of the invention and a schematic view of a vehicle 1 including such vehicle image displaying apparatus 10 according to an embodiment of the invention.

The vehicle 1 generally comprises a vehicle chassis 2 and a roof 3 as is known with common vehicles, such as commonly known cars. A human person 5 (also designated herein as "user" or "passenger"), such as a rear seat passenger travelling in the vehicle, is seated in a back seat of the vehicle 1 and is provided with a head-mounted display device 14 which can be worn on the user's head, as is commonly known in the art. For example, the head-mounted display device 14 is a commonly known VR headset. However, any other suitable head-mounted display device may also be used.

The vehicle image displaying apparatus 10 basically comprises a computing device 13 which is capable of and configured to be coupled with a panoramic vehicle camera 12 and the head-mounted display device 14. In use configuration, the computing device 13, which may comprise one or more microprocessors 16 as commonly used in, e.g., vehicle ECUs, HUs, or in smartphones, is coupled with the panoramic vehicle camera 12 and the head-mounted display device 14, e.g., in wired manner or wirelessly. For example, the computing device 13 may be part of a smartphone (for example, may be or may be a part of one of the smartphone's microprocessors) and may be coupled, for example, by wireless Bluetooth® standard (to name only one possibility) to the panoramic vehicle camera 12 and the head-mounted display device 14. According to another configuration, as shown in Fig. 1, the computing device 13 may be part of the vehicle 1 (such as implemented in the vehicle head unit (HU) or in the ECU, or elsewhere) and may be coupled with the vehicle camera 12 wirelessly (e.g., if the vehicle camera is an after-market product and installed on the vehicle after manufacture thereof), or in wired manner, e.g., via an Ethernet-Bus or CAN-Bus (e.g., if the vehicle camera is an OEM product). The same techniques may be used, in principle, analogously for coupling the computing device 13 to the head-mounted display device 14, which typically is available for the user separately from the vehicle and may be used also in other applications, such as in home entertainment. Other suitable wired and/or wireless configurations and connections between these components are also possible. For example, in a distributed system, the computing device 13 may also comprise or be connected with a so-called Cloud-Server, which is a remote server computer somewhere outside the vehicle, for example coupled through a mobile communications network with the smartphone, ECU and/or HU of the vehicle, respectively, and to which certain processing or calculation procedures can be outsourced. Therefore, according to embodiments of the invention, the vehicle image displaying apparatus 10 may be a partially vehicle integrated device, or may be operated in an autarkic manner, without requiring any sensors and/or computing or processing capabilities of the vehicle 1.

The vehicle camera 12 is a panoramic vehicle camera 12 mounted on or integrated with the vehicle 1. Preferably, the panoramic vehicle camera 12 has a panoramic field of view at least in a horizontal plane of the vehicle 1 and is mounted at the roof 3 of the vehicle 1. Advantageously, the panoramic vehicle camera 12 provides a field of view within a range of approximately +/- 110° from a central line of vision. This advantageously corresponds to the visual field of a human (which is +/- 110° from a central line of vision with stationary head), so that in order to reduce motion sickness (kinetosis symptoms), the field of view of the vehicle camera 12 advantageously corresponds to the user's visual field.

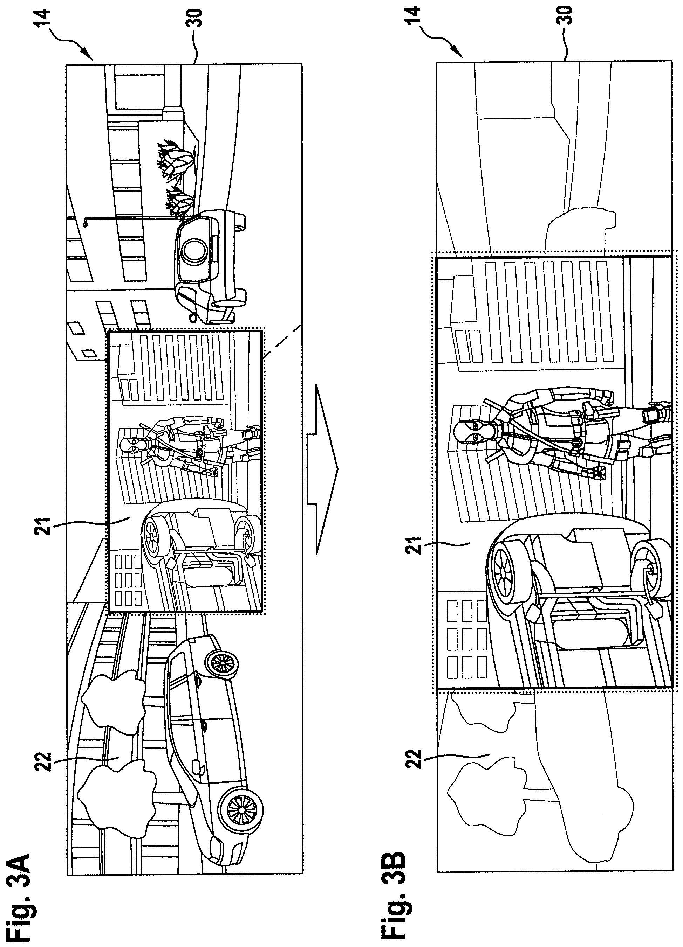

Preferably, the vehicle camera 12 is an omnidirectional vehicle camera with an approximately 360-degree field of view at least in the horizontal plane of the vehicle. In particular, the omnidirectional vehicle camera 11 has a 360-degree field of view, wherein "approximately 360 degree" shall mean that the beginning and end of an image frame (the side edges of an image, see e.g. image depiction according to Figs. 3A, 3B) may not exactly coincide according to a full/exact 360 degrees, but may deviate a few degrees depending on the particular camera settings and circumstances. In the following, the term "360 degree image" shall be understood in this way as an image having a 360-degree field of view at least in the horizontal plane which may have such deviations.

An ideal omnidirectional camera captures light from all directions falling onto the focal point, covering a full sphere. In practice, however, most omnidirectional cameras cover only almost the full sphere and many cameras which are referred to as omnidirectional cover only approximately a hemisphere, or 360 degrees along the equator of the sphere (horizontal plane) but excluding the top and bottom of the sphere. The omnidirectional camera according to the present invention shall encompass all these types of omnidirectional cameras.

The panoramic vehicle camera 12 is configured and arranged to capture at least one sequence of second images 22 of an environment 4 proximate to the vehicle 1 during movement of the vehicle which are displayed on a head-mounted display device 14 (see Fig. 3A, 3B, each depicting one such display 30 according to an embodiment). For example, the panoramic vehicle camera 12 is placed on the vehicle roof 3 (the camera 12 may also be at least partly integrated in the roof 3, for example as is common with commonly known vehicle antennas) to record the environment (preferably the environment 4 located in front and in the periphery of the vehicle 1, or around the vehicle 1 if an omnidirectional camera is used) when driving with the vehicle. The panoramic vehicle camera 12 may also be placed inside the vehicle, or at some other location in or on the vehicle. The sequence of images 22 captured by the panoramic vehicle camera 12 may form a continuous video stream S22 (so-called live image stream), or may be individual images taken at subsequent points of time during driving, or a combination of both, and are provided to the computing device 13.

In the present embodiment, the vehicle 1 further comprises a sensor device 15 providing sensor data for determining at least one parameter which is indicative of at least one vehicle motion property. According to an embodiment, the sensor device 15 is an acceleration sensor providing acceleration data AD for determining at least one parameter which is indicative of acceleration of the vehicle 1. Generally, any sensor device can be used which provides acceleration data for determining at least one parameter which is indicative of at least one acceleration of an entity which is caused by motion of the vehicle 1. For example, if an acceleration sensor of a smartphone is used which is positioned in the vehicle 1 (for example in a mobile phone mount or lying on one of the seats), the measured acceleration of the smartphone is caused by motion of the vehicle. Likewise, an acceleration sensor can be disposed in the panoramic vehicle camera, or elsewhere in an entity which is moved by the vehicle. According to embodiments, the sensor device 15 is comprised in at least one of: the vehicle 1, the panoramic vehicle camera 12, a navigation system located in the vehicle 1, and a portable device adapted to be carried by the user, for example wherein the portable device is one of a smartphone and tablet computer. The sensor device 15 is coupled with the computing device 13 in wired manner or wirelessly, e.g. using common wireless standards.

The computing device 13 is further coupled with a storing device 11, which may be a volatile or non-volatile memory for storing any kind of data, such as individual images, movies, or any other video streams. For example, the computing device 13 receives from the storing device 11 a video stream S21, which is a sequence of first images 21 to be displayed on the head-mounted display device 14. For example, as with common rear seat entertainment systems, if the passenger of the vehicle wants to see a movie during the journey, such movie may be provided from the storing device 11 to the computing device 13 as commonly known. For example, the storing device 11 is a memory of a smartphone or tablet computer, or may be a hard drive of the vehicle. The storing device 11 is coupled with the computing device 13 in wired manner or wirelessly, e.g. using common wireless standards.

The computing device 13 is further coupled with the head-mounted display device 14 in wired manner or wirelessly, e.g. using common wireless standards. For example, the head-mounted display device is embodied as a common VR headset. For instance, a commonly known VR headset may be used having a slot for a smartphone and which interacts with the display screen of the smartphone for providing a VR display on a screen disposed between the smartphone display screen and the user's eyes. Any other types of head-mounted display devices may also be used, such as known in, e.g, home entertainment. With such head-mounted display device 14, the user 5 seated in the rear seat of the vehicle 1 can get an unobstructed view of the environment 4 when the live image stream S22 of the panoramic vehicle camera 12 is displayed on the head-mounted display device 14. The head-mounted display device 14 may give feedback to the computing device 13 as to position of the head-mounted display device 14 and/or the user's viewing direction, so that the display 30 of the live image stream S22 may be adjusted accordingly.

In the following, an operation of the vehicle image displaying apparatus 10 according to an embodiment will be described referring to the exemplary depictions of Figs. 3A and 3B:
When the vehicle 1 is in motion, the computing device 13 determines at least one parameter which is indicative of at least one vehicle motion property, such as acceleration. For example, the at least one parameter is determined from the acceleration sensor data AD provided by sensor device 15. Thus, the determined at least one parameter is indicative of vehicle acceleration (comprising any positive and negative acceleration). For example, a current acceleration or an average acceleration during a certain time period may be determined. Another embodiment may include determining at least one parameter which is indicative of vehicle speed, or indicative of both vehicle speed and acceleration. As such, it may be determined if the passenger 5 undergoes higher or lower vehicle dynamics. For example, higher vehicle dynamics (that is, higher longitudinal and/or lateral acceleration acting on the passenger 5 during the journey) may be present when driving in city drive with frequent change of directions, braking and acceleration of the vehicle, or in curvy country roads. Lower vehicle dynamics (that is, lower longitudinal and/or lateral acceleration acting on the passenger 5 during the journey) may be present when driving on a straight motorway, or during a stop at a traffic light.

During motion of the vehicle 1 and when the determined at least one parameter has, for example, a first value indicative of a higher acceleration, the sequence of first images 21 (e.g., the video stream S21) and the at least one sequence of second images 22 (i.e., the live video stream S22) are displayed simultaneously on the head-mounted display device 14 such that the sequence of first images 21 (that is, the video stream S21) is overlaid onto the sequence of second images 22 (the live video stream S22) and the sequence of second images 22 provides a peripheral optical flow of images to the user 5 when the user 5 focuses on the sequence of first images 21. As shown in Fig. 3A, the sequence of first images 21 is overlaid onto the sequence of second images 22 such that the respective first image 21 is framed by the sequence of second images 22 on the head-mounted display device 14. In an embodiment, the respective first image 21 (such as the video stream S21) is displayed in or near a center region of the display on the head-mounted display device, whereas the sequence of second images 22 (the live video stream S22) is displayed in left and right peripheral regions of the display on the head-mounted display device to provide the peripheral optical flow of live images to the user 5 when the user 5 focuses on the sequence of first images 21 in the center region of the display.

For example, as shown in Fig. 3A, in driving situations with higher vehicle dynamics (as in, e.g, city drive, curvy country road, etc.) with the passenger being exposed to a higher longitudinal/lateral acceleration during vehicle motion, the sequence of second images (that is, the live video stream of the environment) may be displayed quite real (e.g., with brightness, color, sharpness, etc., close to or equal as viewed in reality) for full visual and sensoric immersion. This may prevent motion-sickness of the passenger.

When the computing device 13 determines that the at least one parameter has a second value different from the first value, for example determines that the at least one parameter is indicative of a lower acceleration, the computing device 13 changes at least one image property of the sequence of second images 22, i.e. of the live video stream S22. For example, the computing device 13 changes sharpness, color, saturation, brightness, or contrast, or any combination thereof, of the live video stream S22.

For example, as shown in Fig. 3B, in driving situations with lower vehicle dynamics (such as when driving on, e.g., a straight motorway) with the passenger being exposed to a lower acceleration during vehicle motion, the sequence of second images 22 (that is, the live video stream S22) may be displayed in a manner alienated from reality, e.g. with reduced sharpness, and/or reduced brightness, and/or with dark, and/or blurry, and/or unsaturated colors, or any combination thereof, keeping just a slight reference for peripheral optical flow of images of the environment. This is shown in Fig. 3B only schematically. The passenger may thus concentrate more on the video stream S21 and is less distracted from enjoying the first images 21 (i.e. video stream S21). Displaying in a manner alienated from reality shall mean that at least one image property is changed in a direction away from reality.

In addition, as shown in relation between Figs. 3A and 3B, according to an embodiment, in driving situations with higher vehicle dynamics, the size of the display displaying the sequence of first images 21 (that is, the screen displaying the video stream S21) is smaller (see Fig. 3A), whereas in driving situations with lower vehicle dynamics the size of the display displaying the sequence of first images 21 (that is, the screen displaying the video stream S21) is larger (see Fig. 3B). This also accounts for reducing motion sickness, since in situations of higher vehicle dynamics, the peripheral optical flow of the live images 22 is larger with respect to the centrally displayed video stream 21, and in situations of lower vehicle dynamics, the experience of watching the video stream 21 is enhanced with a larger display screen displaying the video stream S21.

Therefore, advantageously, the present invention is capable to provide a large-screen movie playback on the head-mounted display device while avoiding motion sickness. So, even if the rear passenger is watching a movie on the head-mounted display device, the passenger will not suffer from motion sickness caused by using the head-mounted display device, because the peripheral optical flow of images of the environment is related to and changed according to his perceived body motion caused by the vehicle motion, particularly is changed accordingly depending on the at least one parameter which is indicative of at least one vehicle motion property. Nevertheless, the passenger can enjoy an unobstructed view of the environment and journey around the vehicle, if he or she wants to, which is provided by the sequence of live images captured by the panoramic vehicle camera during motion of the vehicle.

## Claims

1. A method of displaying image data on a head-mounted display device (14) disposed in a vehicle (1), comprising the steps of:
- receiving, by a computing device (13) comprising a processor (16) and adapted to be coupled with the head-mounted display device (14) worn by a user (5) in the vehicle (1), at least one first image (21) for displaying on the head-mounted display device (14),
- receiving, by the computing device (13), at least one sequence of second images (22) of an environment proximate the vehicle (1) captured with a panoramic vehicle camera (12) during motion of the vehicle,
- determining, by the computing device (13), at least one parameter which is indicative of at least one vehicle motion property,
- displaying, by the computing device (13), during motion of the vehicle (1) and when the at least one parameter has a first value, the at least one first image (21) and the at least one sequence of second images (22) simultaneously on the head-mounted display device (14) such that the at least one first image (21) is overlaid onto the at least one sequence of second images (22) and the at least one sequence of second images (22) provides a peripheral optical flow of images to the user (5) when focusing on the at least one first image (21), and
- changing, by the computing device (13), at least one image property of the at least one sequence of second images (22) if the at least one parameter has a second value different from the first value.

2. The method according to claim 1, wherein the at least one first image (21) is overlaid onto the at least one sequence of second images (22) such that the at least one first image (21) is framed by the at least one sequence of second images (22) on the head-mounted display device (14).

3. The method according to one of claims 1 or 2, wherein the at least one parameter is determined from sensor data (AD) provided by a sensor device (15).

4. The method according to one of claims 1 to 3, wherein changing, by the computing device (13), at least one image property of the at least one sequence of second images (22) includes changing at least one of sharpness, color, saturation, brightness, and contrast of the at least one sequence of second images (22).

5. The method according to one of claims 1 to 4, wherein the at least one parameter is indicative of at least one acceleration of an entity caused by motion of the vehicle (1).

6. The method according to claim 5, wherein, if the second value of the at least one parameter is indicative of a higher acceleration than the first value, at least one of sharpness, color, saturation, brightness, and contrast of the at least one sequence of second images (22) is changed in a direction to closer conform with reality, and if the second value of the at least one parameter is indicative of a lower acceleration than the first value, at least one of sharpness, color, saturation, brightness, and contrast of the at least one sequence of second images (22) is changed in a direction to alienate from reality.

7. The method according to one of claims 1 to 6, further comprising changing, by the computing device (13), the displaying of the at least one first image (21) on the head-mounted display device (14) if the at least one parameter has the second value.

8. The method according to claim 7, wherein changing, by the computing device (13), the displaying of the at least one first image (21) on the head-mounted display device (14) includes changing a size of the at least one first image (21).

9. The method according to claim 8, wherein the at least one parameter is indicative of at least one acceleration of an entity caused by motion of the vehicle (1), and if the second value of the at least one parameter is indicative of a higher acceleration than the first value, the size of the at least one first image (21) is adjusted to a first size, and if the second value of the at least one parameter is indicative of a lower acceleration than the first value, the size of the at least one first image (21) is adjusted to a second size which is greater than the first size.

10. The method according to one of claims 1 to 9, wherein the at least one first image (21) is at least one sequence of first images (21), preferably the least one sequence of first images (21) is part of a video stream.

11. A computer program product comprising software code sections which are adapted to perform a method according to one of the preceding claims when loaded into an internal memory of the computing device (13).

12. Vehicle image displaying apparatus (10), comprising
- a computing device (13) comprising a processor (16), the computing device adapted to be coupled with a head-mounted display device (14) worn by a user (5) in a vehicle (1), and configured to receive at least one first image (21) for displaying on the head-mounted display device (14),
- the computing device (13) configured to receive at least one sequence of second images (22) of an environment proximate the vehicle (1) captured with a panoramic vehicle camera (12) during motion of the vehicle,
- the computing device (13) configured to determine at least one parameter which is indicative of at least one vehicle motion property,
- the computing device (13) configured to display, during motion of the vehicle (1) and when the at least one parameter has a first value, the at least one first image (21) and the at least one sequence of second images (22) simultaneously on the head-mounted display device (14) such that the at least one first image (21) is overlaid onto the at least one sequence of second images (22) and the at least one sequence of second images (22) provides a peripheral optical flow of images to the user (5) when focusing on the at least one first image (21), and
- the computing device (13) configured to change at least one image property of the at least one sequence of second images (22) if the at least one parameter has a second value different from the first value.

13. Vehicle image displaying apparatus according to claim 12, further comprising the panoramic vehicle camera (12), wherein the panoramic vehicle camera (12) has a panoramic field of view at least in a horizontal plane of the vehicle (1) and is mounted at a roof (3) of the vehicle, preferably wherein the panoramic vehicle camera (12) provides a field of view within a range of approximately +/- 110° from a central line of vision, preferably is an omnidirectional vehicle camera with an approximately 360-degree field of view at least in the horizontal plane of the vehicle.

14. Vehicle image displaying apparatus according to one of claims 12 to 13, wherein the computing device (13) is comprised in at least one of: the vehicle (1), the panoramic vehicle camera (12), a navigation system located in the vehicle, and a portable device adapted to be carried by the user (5), preferably wherein the portable device is one of a smartphone and tablet computer.

15. Vehicle image displaying apparatus according to one of claims 12 to 14, further comprising the head-mounted display device (14), wherein the head-mounted display device (14) is a virtual reality head-mounted display device.

## Patentansprüche

1. Verfahren zum Anzeigen von Bilddaten auf einer am Kopf angebrachten Anzeigevorrichtung (14), die in einem Fahrzeug (1) angeordnet ist, wobei das Verfahren die folgenden Schritte aufweist:
- Empfangen mindestens eines ersten Bilds (21) zur Anzeige auf der am Kopf angebrachten Anzeigevorrichtung (14) durch eine Rechenvorrichtung (13), die einen Prozessor (16) aufweist und zur Kopplung mit der am Kopf angebrachten Anzeigevorrichtung (14) ausgebildet ist, die von einem Nutzer (5) in dem Fahrzeug (1) getragen wird,
- durch die Rechenvorrichtung (13) erfolgendes Empfangen von mindestens einer Sequenz von zweiten Bildern (22) einer Umgebung in der Nähe des Fahrzeugs (1), die mit einer Panorama-Fahrzeugkamera (12) während der Bewegung des Fahrzeugs aufgenommen wird,
- durch die Rechenvorrichtung (13) erfolgendes Bestimmen von mindestens einem Parameter, der mindestens eine Fahrzeugbewegungseigenschaft anzeigt,
- durch die Rechenvorrichtung (13) erfolgendes Anzeigen, während der Bewegung des Fahrzeugs (1) und wenn der mindestens eine Parameter einen ersten Wert aufweist, des mindestens einen ersten Bilds (21) und der mindestens einen Sequenz von zweiten Bildern (22) gleichzeitig auf der am Kopf angebrachten Anzeigevorrichtung (14) derart, dass das mindestens eine erste Bild (21) der mindestens einen Sequenz von zweiten Bildern (22) überlagert wird und die mindestens eine Sequenz von zweiten Bildern (22) dem Nutzer (5) bei Fokussierung auf das mindestens eine erste Bild (21) einen peripheren optischen Fluss von Bildern liefert, und
- durch die Rechenvorrichtung (13) erfolgendes Ändern von mindestens einer Bildeigenschaft der mindestens einen Sequenz von zweiten Bildern (22), wenn der mindestens eine Parameter einen von dem ersten Wert verschiedenen, zweiten Wert aufweist.

2. Verfahren nach Anspruch 1,
wobei das mindestens eine erste Bild (21) der mindestens einen Sequenz von zweiten Bildern (22) überlagert wird, so dass das mindestens eine erste Bild (21) von der mindestens einen Sequenz von zweiten Bildern (22) auf der am Kopf angebrachten Anzeigevorrichtung (14) eingerahmt wird.

3. Verfahren nach einem der Ansprüche 1 oder 2,
wobei der mindestens eine Parameter aus Sensordaten (AD) bestimmt wird, die von einer Sensorvorrichtung (15) bereitgestellt werden.

4. Verfahren nach einem der Ansprüche 1 bis 3,
wobei das durch die Rechenvorrichtung (13) erfolgende Ändern mindestens einer Bildeigenschaft der mindestens einen Sequenz von zweiten Bildern (22) das Ändern von mindestens einem von Schärfe, Farbe, Sättigung, Helligkeit und Kontrast der mindestens einen Sequenz von zweiten Bildern (22) beinhaltet.

5. Verfahren nach einem derAnsprüche 1 bis 4,
wobei der mindestens eine Parameter mindestens eine Beschleunigung einer Entität anzeigt, die durch Bewegung des Fahrzeugs (1) verursacht wird.

6. Verfahren nach Anspruch 5,
wobei dann, wenn der zweite Wert des mindestens einen Parameters eine höhere Beschleunigung als der erste Wert anzeigt, mindestens eines von Schärfe, Farbe, Sättigung, Helligkeit und Kontrast der mindestens einen Sequenz von zweiten Bildern (22) in einer Richtung geändert wird, um näher an der Realität zu sein, und wenn der zweite Wert des mindestens einen Parameters eine geringere Beschleunigung als der erste Wert anzeigt, mindestens eines von Schärfe, Farbe, Sättigung, Helligkeit und Kontrast der mindestens einen Sequenz von zweiten Bildern (22) in einer Richtung geändert wird, um sich von der Realität zu entfernen.

7. Verfahren nach einem derAnsprüche 1 bis 6,
das ferner das Ändern der Anzeige des mindestens einen ersten Bildes (21) auf der am Kopf angebrachten Anzeigeeinrichtung (14) durch die Recheneinrichtung (13) beinhaltet, wenn der mindestens eine Parameter den zweiten Wert aufweist.

8. Verfahren nach Anspruch 7,
wobei das Ändern der Anzeige des mindestens einen ersten Bildes (21) auf der am Kopf angebrachten Anzeigevorrichtung (14) durch die Rechenvorrichtung (13) das Ändern einer Größe des mindestens einen ersten Bildes (21) beinhaltet.

9. Verfahren nach Anspruch 8,
wobei der mindestens eine Parameter mindestens eine Beschleunigung einer Entität anzeigt, die durch Bewegung des Fahrzeugs (1) verursacht wird, und wobei dann, wenn der zweite Wert des mindestens einen Parameters eine höhere Beschleunigung anzeigt als der erste Wert, die Größe des mindestens einen ersten Bildes (21) auf eine erste Größe eingestellt wird, und dann, wenn der zweite Wert des mindestens einen Parameters eine geringere Beschleunigung als der erste Wert anzeigt, die Größe des mindestens einen ersten Bildes (21) auf eine zweite Größe eingestellt wird, die größer als die erste Größe ist.

10. Verfahren nach einem der Ansprüche 1 bis 9,
wobei das mindestens eine erste Bild (21) mindestens eine Sequenz von ersten Bildern (21) ist, vorzugsweise die mindestens eine Sequenz von ersten Bildern (21) Teil eines Video-Streams ist.

11. Computerprogrammprodukt mit Softwarecodeabschnitten, die dazu ausgebildet sind, ein Verfahren nach einem der vorhergehenden Ansprüche auszuführen, wenn sie in einen internen Speicher der Rechenvorrichtung (13) geladen werden.

12. Fahrzeugbildanzeigevorrichtung (10), aufweisend:
- eine Rechenvorrichtung (13) mit einem Prozessor (16), wobei die Rechenvorrichtung dazu ausgebildet ist, mit einer am Kopf angebrachten Anzeigevorrichtung (14) gekoppelt zu werden, die von einem Nutzer (5) in einem Fahrzeug (1) getragen wird, und dazu ausgebildet ist, mindestens ein erstes Bild (21) zur Anzeige auf der am Kopf angebrachten Anzeigevorrichtung (14) zu empfangen,
- wobei die Rechenvorrichtung (13) dazu ausgebildet ist, mindestens eine Sequenz von zweiten Bildern (22) einer Umgebung in der Nähe des Fahrzeugs (1) zu empfangen, die mit einer Panorama-Fahrzeugkamera (12) während der Bewegung des Fahrzeugs aufgenommen wird,
- wobei die Rechenvorrichtung (13) dazu ausgebildet ist, mindestens einen Parameter zu bestimmen, der mindestens eine Fahrzeugbewegungseigenschaft anzeigt,
- wobei die Rechenvorrichtung (13) dazu ausgebildet ist, während einer Bewegung des Fahrzeugs (1) und wenn der mindestens eine Parameter einen ersten Wert aufweist, das mindestens eine erste Bild (21) und die mindestens eine Sequenz von zweiten Bildern (22) gleichzeitig auf der am Kopf angebrachten Anzeigeeinrichtung (14) derart anzuzeigen, dass das mindestens eine erste Bild (21) der mindestens einen Sequenz von zweiten Bildern (22) überlagert wird und die mindestens eine Sequenz von zweiten Bildern (22) dem Nutzer (5) bei Fokussierung auf das mindestens eine erste Bild (21) einen peripheren optischen Fluss von Bildern liefert, und
- wobei die Rechenvorrichtung (13) dazu ausgebildet ist, mindestens eine Bildeigenschaft der mindestens einen Sequenz von zweiten Bildern (22) zu ändern, wenn der mindestens eine Parameter einen von dem ersten Wert verschiedenen, zweiten Wert aufweist.

13. Fahrzeugbildanzeigevorrichtung nach Anspruch 12,
die weiterhin die Panorama-Fahrzeugkamera (12) aufweist, wobei die Panorama-Fahrzeugkamera (12) zumindest in einer horizontalen Ebene des Fahrzeugs (1) ein Panoramasichtfeld aufweist und an einem Dach (3) des Fahrzeugs montiert ist, wobei vorzugsweise die Panorama-Fahrzeugkamera (12) ein Sichtfeld innerhalb eines Bereichs von ungefähr +/- 110 ° von einer zentralen Sichtlinie bereitstellt, vorzugsweise eine omnidirektionale Fahrzeugkamera mit einem Sichtfeld von ungefähr 360 Grad zumindest in der horizontalen Ebene des Fahrzeugs ist.

14. Fahrzeugbildanzeigevorrichtung nach einem der Ansprüche 12 bis 13,
wobei die Rechenvorrichtung (13) in mindestens einem der Folgenden enthalten ist: dem Fahrzeug (1), der Panorama-Fahrzeugkamera (12), einem Navigationssystem, das sich in dem Fahrzeug befindet, und einer tragbaren Vorrichtung, die zum Tragen durch den Nutzer (5) ausgelegt ist, wobei die tragbare Vorrichtung vorzugsweise ein Smartphone oder ein Tablet-Computer ist.

15. Fahrzeugbildanzeigevorrichtung nach einem derAnsprüche 12 bis 14,
die weiterhin die am Kopf angebrachte Anzeigevorrichtung (14) aufweist, wobei die am Kopf angebrachte Anzeigevorrichtung (14) eine am Kopf angebrachte Virtual-Reality-Anzeigevorrichtung ist.

## Revendications

1. Procédé d'affichage de données d'images sur un dispositif d'affichage (14) monté sur la tête, disposé dans un véhicule (1), comprenant les étapes consistant à :
- recevoir, par l'intermédiaire d'un dispositif (13) faisant office d'ordinateur comprenant un processeur (16) et conçu pour être accouplé au dispositif d'affichage (14) monté sur la tête, porté par un utilisateur (5) dans le véhicule (1), au moins une première image (21) destinée à s'afficher sur le dispositif d'affichage (14) monté sur la tête ;
- recevoir, par l'intermédiaire du dispositif (13) faisant office d'ordinateur, au moins une succession de secondes images (22) d'un environnement à proximité du véhicule (1) capturées avec une caméra panoramique de véhicule (12) au cours du déplacement du véhicule ;
- déterminer, par l'intermédiaire du dispositif (13) faisant office d'ordinateur, au moins un paramètre qui fournit des indications concernant au moins une propriété du déplacement du véhicule ;
- afficher, par l'intermédiaire du dispositif (13) faisant office d'ordinateur, au cours de déplacement du véhicule (1) et lorsque ledit au moins un paramètre possède une première valeur, ladite au moins une première image (21) et ladite au moins une succession de secondes images (22) de manière simultanée sur le dispositif d'affichage (14) monté sur la tête, d'une manière telle que ladite au moins une première image (21) vient se superposer à ladite au moins une succession de secondes images (22) et ladite au moins une succession de secondes images (22) procure un flux optique périphérique d'images à l'utilisateur (5) lorsque ce dernier se focalise sur ladite au moins une première image (21) ; et
- modifier, par l'intermédiaire du dispositif (13) faisant office d'ordinateur, au moins une propriété d'image de ladite au moins une succession de secondes images (22) lorsque ledit au moins un paramètre possède une seconde valeur différente de la première valeur.

2. Procédé selon la revendication 1, dans lequel ladite au moins une première image (21) vient se superposer à ladite au moins une succession de secondes images (22) d'une manière telle que ladite au moins une première image (21) est encadrée par ladite au moins une succession de secondes images (22) sur le dispositif d'affichage (14) monté sur la tête.

3. Procédé selon l'une quelconque des revendications 1 ou 2, dans lequel ledit au moins un paramètre est déterminé à partir de données de détection (AD) fournies par un dispositif (15) faisant office de capteur.

4. Procédé selon l'une quelconque des revendications 1 à 3, dans lequel, une modification, par l'intermédiaire du dispositif (13) faisant office d'ordinateur, d'au moins une propriété d'image de ladite au moins une succession de secondes images (22) inclut la modification d'au moins une propriété choisie parmi la netteté, la couleur, la saturation, la luminosité et le contraste de ladite au moins une succession de secondes images (22).

5. Procédé selon l'une quelconque des revendications 1 à 4, dans lequel ledit au moins un paramètre fournit des indications concernant au moins une accélération d'une entité, provoquée par le déplacement du véhicule (1).

6. Procédé selon la revendication 5, dans lequel, lorsque la seconde valeur dudit au moins un paramètre fournit des indications concernant une accélération supérieure à la première valeur, au moins une propriété choisie parmi la netteté, la couleur, la saturation, la luminosité et le contraste de ladite au moins une succession de secondes images (22) est modifiée dans une direction permettant d'épouser plus étroitement la réalité, et lorsque la seconde valeur dudit au moins un paramètre fournit des indications concernant une accélération inférieure à la première valeur, au moins une propriété choisie parmi la netteté, la couleur, la saturation, la luminosité et le contraste de ladite au moins une succession de secondes images (22) est modifiée dans une direction permettant de s'éloigner de la réalité.

7. Procédé selon l'une quelconque des revendications 1 à 6, comprenant en outre une modification, par l'intermédiaire du dispositif (13) faisant office d'ordinateur, de l'affichage de ladite au moins une première image (21) sur le dispositif d'affichage (14) monté sur la tête, lorsque ledit au moins un paramètre possède la seconde valeur.

8. Procédé selon la revendication 7, dans lequel, une modification, par l'intermédiaire du dispositif (13) faisant office d'ordinateur, de l'affichage de ladite au moins une première image (21) sur le dispositif d'affichage (14) monté sur la tête inclut la modification d'une dimension de ladite au moins une première image (21).

9. Procédé selon la revendication 8, dans lequel ledit au moins un paramètre fournit des indications concernant au moins une accélération d'une entité, provoquée par le déplacement du véhicule (1) et lorsque la seconde valeur dudit au moins un paramètre fournit des indications concernant une accélération supérieure à la première valeur, la dimension de ladite au moins une première image (21) est réglée à la première dimension et lorsque la seconde valeur dudit au moins un paramètre fournit des indications concernant une accélération inférieure à la première valeur, la dimension de ladite au moins une première image (21) est réglée à une seconde dimension qui est supérieure à la première dimension.

10. Procédé selon l'une quelconque des revendications 1 à 9, dans lequel ladite au moins une première image (21) représente au moins une succession de premières images (21) ; de préférence, ladite au moins une succession de premières images (21) fait partie d'un flux de données vidéo.

11. Produit de programme informatique comprenant des segments de code de logiciel qui sont conçus pour mettre en oeuvre un procédé selon l'une quelconque des revendications précédentes après leur chargement dans une mémoire interne du dispositif (13) faisant office d'ordinateur.

12. Appareil d'affichage d'images (10) destiné à un véhicule, comprenant :
- un dispositif (13) faisant office d'ordinateur comprenant un processeur (16), le dispositif faisant office d'ordinateur étant conçu pour être accouplé à un dispositif d'affichage (14) monté sur la tête, porté par un utilisateur (5) dans un véhicule (1), et étant configuré pour recevoir au moins une première image (21) destinée à s'afficher sur le dispositif d'affichage (14) monté sur la tête ;
- le dispositif (13) faisant office d'ordinateur configuré pour recevoir au moins une succession de secondes images (22) d'un environnement à proximité du véhicule (1), capturées avec une caméra panoramique de véhicule (12) au cours de déplacement du véhicule ;
- le dispositif (13) faisant office d'ordinateur configuré pour déterminer au moins un paramètre qui fournit des indications concernant au moins une propriété de déplacement du véhicule ;
- le dispositif (13) faisant office d'ordinateur configuré pour afficher, au cours du déplacement du véhicule (1) et lorsque ledit au moins un paramètre possède une première valeur, ladite au moins une première image (21) et ladite au moins une succession de secondes images (22) de manière simultanée sur le dispositif d'affichage (14) monté sur la tête, d'une manière telle que ladite au moins une première image (21) vient se superposer à ladite au moins une succession de secondes images (22) et ladite au moins une succession de secondes images (22) procure un flux optique périphérique d'images à l'utilisateur (5) lorsque ce dernier se focalise sur ladite au moins une première image (21) ; et
- le dispositif (13) faisant office d'ordinateur configuré pour modifier au moins une propriété d'image de ladite au moins une succession de secondes images (22) lorsque ledit au moins un paramètre possède une seconde valeur différente de la première valeur.

13. Appareil d'affichage d'images destiné à un véhicule, selon la revendication 12, comprenant en outre la caméra panoramique de véhicule (12), dans lequel la caméra panoramique de véhicule (12) possède un champ de vision panoramique au moins dans un plan horizontal du véhicule (1) et est montée sur un toit (3) du véhicule ; de préférence, dans lequel la caméra panoramique de véhicule (12) procure un champ de vision au sein d'une plage d'approximativement ± 110° par rapport à une ligne centrale de vision ; de préférence représente une caméra de véhicule omnidirectionnelle possédant un champ de vision d'approximativement 360° au moins dans le plan horizontal du véhicule.

14. Appareil d'affichage d'images destiné à un véhicule, selon l'une quelconque des revendications 12 à 13, dans lequel le dispositif (13) faisant office d'ordinateur est compris dans au moins un élément choisi parmi : le véhicule (1) ; la caméra panoramique de véhicule (12) ; un système de navigation incorporé dans le véhicule ; et un dispositif portable conçu pour être transporté par l'utilisateur (5) ; de préférence dans lequel le dispositif portable représente un dispositif choisi parmi un téléphone intelligent et une tablette numérique.

15. Appareil d'affichage d'images destiné à un véhicule, selon l'une quelconque des revendications 12 à 14, comprenant en outre le dispositif d'affichage (14) monté sur la tête ; dans lequel le dispositif d'affichage (14) monté sur la tête représente un dispositif d'affichage de réalité virtuelle monté sur la tête.
